# EUROPÄISCHE PATENTSCHRIFT

(11) **EP 0 388 689 B1**
(45) Veröffentlichungstag und Bekanntmachung des Hinweises auf die Patenterteilung: **29.06.1994**
(21) Anmeldenummer: 90104108.7
(22) Anmeldetag: 02.03.1990
(51) Int. Cl.: H01G 1/14, H01G 1/10, H01G 4/22, H01G 4/32

(54) **Axialer elektrischer Wickelkondensator**
Axial electric wound capacitor
Condensateur électrique enroulé axial

(30) Priorität: 20.03.1989 EP 89104952
(43) Veröffentlichungstag der Anmeldung: 26.09.1990
(73) Patentinhaber: SIEMENS AKTIENGESELLSCHAFT, 80333 München (DE)
(72) Erfinder: Vetter, Harald, Dipl.-Ing. (FH), D-8400 Regensburg (DE)

(56) Entgegenhaltungen:
- CH-A- 506 869
- DE-A- 1 464 375
- DE-A- 1 479 123
- DE-A- 3 226 406
- DE-A- 3 544 141
- DE-B- 1 166 373
- GB-A- 600 322

## Beschreibung

Die Erfindung betrifft einen axialen elektrischen Wickelkondensator, insbesondere Leistungskondensator, gemäß dem Oberbegriff des Patentanspruches 1.

Derartige Kondensatoren sind aus der DE 32 26 406 A1 bekannt und bestehen aus dielektrischen Kunststoffolien (z.B. Polypropylen, Polycarbonat, Polyethylenterephthalat und andere geeignete Kunststoffe) und besitzen als Elektroden regenerierfähig dünne Metallschichten (z.B. aus Aluminium, Zink oder Legierungen dieser Metalle), die entweder auf die Dielektrikumsfolien oder auf im feldfreien Raum angeordnete Trägermaterialien (z.B. Papier) aufgebracht sind. Zur Kontaktierung der versetzt angeordneten Elektroden werden auf den Wickelstirnseiten Kontaktschichten z.B. nach dem Schoop'schen Flammspritzverfahren hergestellt.

Falls es erforderlich ist, können auch mehrere Kondensatorwickel miteinander verschaltet werden.

Der bekannte Kondensator besitzt eine Umhüllung, die aus einem Band oder einer Folie besteht, welche den Wickelmantel und die Ränder der Durchführungselemente bedeckt. Eine, insbesondere nachträgliche Imprägnierung, ist beim bekannten Kondensator nicht möglich.

Kondensatortypen, die eine Imprägnierung mit einer isolierenden dielektrischen Flüssigkeit wie z.B. Mineralöl und/oder einem elektronegativen Gas wie beispielsweise Schwefelhexafluorid aufweisen, werden in Metallgehäuse eingebaut.

Zur Beschaltung von GTO-Thyristoren werden neben anderen Bauelementen vollisolierte Kondensatoren in axialer Bauweise benötigt. Falls die Kondensatoren in bekannter Bauweise mit in Metallgehäusen dicht eingebauten Wickeln ausgeführt sind, besteht die Möglichkeit der nachträglichen Vollisolation. Dazu kann das Gehäuse beispielsweise umgossen bzw. umspritzt werden, wodurch die Herstellung aufwendig und teuer wird.

Bei der bisher nur für kleine Kondensatortypen bekannten Kunststoffumhüllung muß im Bereich der Durchführung der Kontakte das Umhüllmaterial ausreichend dicht angebunden werden. Trotz Einsatzes von Haftvermittlern und/oder dem Aufrauhen sowohl beim Umspritzen als auch beim Umgießen lassen sich vollbefriedigende Ergebnisse, insbesondere bei Temperaturwechselbelastungen, nicht erzielen.

Weiterhin ist bei flüssigkeitsimprägnierten Kondensatorwickeln eine Umhüllung nach der Imprägnierung aufgrund des Trennmitteleffekts der Imprägnierflüssigkeit nicht möglich. Auch sehen die aus dem Stand der Technik bekannten Kunststoffumhüllungen keine Maßnahmen vor, einen für das Imprägniermittel ausreichenden Fließquerschnitt nach Fertigstellung der Umhüllung zur Verfügung zu stellen.

Aufgabe der Erfindung ist es, einen axialen elektrischen Wickelkondensator anzugeben, der eine kostengünstige Kunststoffumhüllung aufweist, die auch im Bereich der Durchführungselemente bei Temperaturwechselbelastungen dicht bleibt und bei der eine nachträgliche Imprägnierung des Kondensators möglich ist.

Diese Aufgabe wird erfindungsgemäß mit einem axialen elektrischen Wickelkondensator gelöst, der die Merkmale des Patentanspruchs 1 besitzt.

Vorteilhafte Ausgestaltungen dieses Wickelkondensators sind in den Unteransprüchen angeführt.

Die Vorteile des Gegenstandes der Erfindung werden anhand der folgenden Ausführungsbeispiele näher erläutert.

In der dazugehörenden Zeichnung zeigen
- FIG 1: einen vollumhüllten, axialen Wickelkondensator,
- FIG 2: einen vollumhüllten, axialen Wickelkondensator mit innerer Reihenschaltung,
- FIG 3: einen vollumhüllten axialen Wickelkondensator mit fasergewickeltem Kunststoffgehäuse,
- FIG 4: einen vergrößerten Ausschnitt aus FIG 3 und
- FIG 5: eine weitere Ausführungsform mit metallbeschichteter Platine.

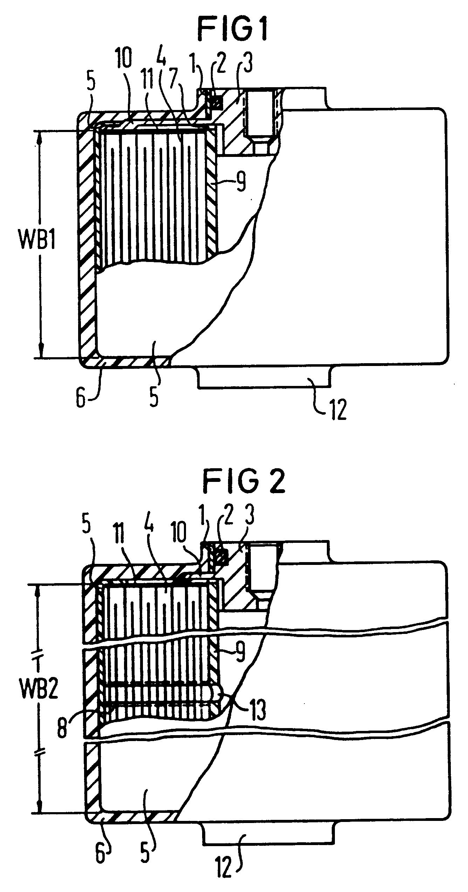

In der FIG 1 ist in teilweise geschnittener Darstellung ein Kondensatorwickel 4 gezeigt, der auf einem Kernrohr 9 angeordnet ist. Der noch nicht umhüllte und noch nicht imprägnierte Kondensatorwickel 4 ist mit einem eine Scheibe 10 aufweisenden Kontakt-Durchführungselement 3 versehen, das zentrisch mit dem Kernrohr 9 verbunden ist. Das Kontakt-Durchführungselement 3 besitzt entweder ein Sackgewinde mit Imprägnierloch oder einen Gewindebolzen mit außerhalb des Zentrums liegendem Imprägnierloch (in der FIG 1 nicht dargestellt). Die Imprägnierlöcher werden nach erfolgter Imprägnierung beispielsweise mit Blindnieten verschlossen.

Das Kontakt-Durchführungselement 3 besitzt mindestens einen Einstich mit einem O-Dichtungsring 2 in den Abmessungen einer Pneumatik-Hochdruckdichtung. Falls es erforderlich ist, kann auch ein zweiter O-Dichtungsring mit Einstich angebracht werden.

Auf das Durchführungs-Kontaktelement 3 wird ein Spannring 1 vor dem Umhüllvorgang aufgepreßt, damit der O-Dichtungsring 2 vorgespannt ist und so die Dichtfunktion übernehmen kann. Der Spannring 1 stellt mit seiner Außenfläche die Kontaktzone zur Kunststoffumhüllung 6 dar und besteht vorzugsweise aus dem gleichen Material wie die Umhüllung 6. Bei Thermoplasten kann der Spannring 1 aus einer Materialvariante mit niedrigerem Schmelzpunkt als das Grundmaterial hergestellt werden. Dadurch erreicht man eine außerordentlich gute Haftung zwischen Spannring 1 und Kunststoffumhüllung 6. Der Scheibenbereich 10 des Kontaktdurchführungselements 3 stellt zusätzlich die erreichbare Dichtqualität sicher.

Das Kontakt-Durchführungselement 3 ist für Einzelwickel einer bestimmten Breite WB1 so ausgeführt, daß ein Fließkanal 7 über die Zentrierung und/oder das Kernrohr 9 und die Scheibe 10 vorhanden ist. Die Scheibe 10 des Durchführungskontaktelementes 3 ist beispielsweise an drei Stellen mit der Schoopschicht 11 des Kondensatorwickels 4 verlötet.

Eine vorzugsweise schrumpfbare Isolierfolie 5 dichtet gegenüber der Wickelwandumhüllung insbesondere bei Wickel- und innerer Reihenschaltung ab. Trotzdem ist durch entsprechende Ausgestaltung des Fließkanals 7 gewährleistet, daß der Kondensatorwickel 4 ausreichend durchimprägniert werden kann.

Auf der Unterseite des Kondensators ist ein weiteres Kontakt-Durchführungselement 12 angeordnet, das in gleicher Weise wie das Kontakt-Durchführungselement 3 auf der Oberseite ausgestaltet ist.

In der FIG 2 ist ein vollumhüllter, axialer Wickelkondensator mit innerer Reihenschaltung dargestellt, der eine größere Wickelbreite WB2 besitzt als der in FIG 1 dargestellte Kondensator. Derartige Wickel können mit vertretbarem Aufwand nicht mehr getrocknet und imprägniert werden wie die in FIG 1 dargestellte Ausführungsform.

Deshalb ist beim Kondensator nach FIG 2 bei innerer Reihenschaltung eine Bohrung 13 durch das Kernrohr 9 über die äußere Wickelhülle zentrisch zum Freistreifen 8 gebohrt. Der Bohrungsdurchmesser ist deutlich kleiner als die Breite des Freistreifens 8.

Eine alternative Möglichkeit, über das Kernrohr 9 einen Fließweg für das Imprägniermittel zu erzeugen, ist z.B. die Perforation des Wickelmaterials vor dem oder während des Wickelprozesses.

Es ist zwar bekannt, Bohrungen zur Reduzierung der Trocken- bzw. Imprägnierzeit bei Wickeln mit innerer Reihenschaltung vorzusehen, eine wesentliche Änderung des bekannten Standes der Technik ist aber, daß die Bohrung 13 zwingend durch das Kernrohr 9 geführt wird. Ferner ist erforderlich, daß hierbei eine dichtende Schicht 5 an der äußeren Wickelhülle, vorzugsweise in Form einer Schrumpffolie bzw. eines Schrumpfschlauches aufgebracht ist, um eine Imprägnierung nach dem Umhüllvorgang in vertretbaren Zeiten zu ermöglichen.

Nachdem gemäß den FIG 1 und 2 die Kontakt-Durchführungselemente 3, 12 mit O-Dichtungsring 2 und Spannring 1 versehen sind, sowie die Bohrung 13 und die dichtende Schicht 5 angeordnet sind, kann der so vorbereitete Wickel 4 in eine Spritzform eingesetzt und umhüllt werden. Die dichtende Schicht 5 verhindert das Eindringen des Spritzmaterials in die Bohrung, der Spannring 1 dichtet gegen den O-Ring 2 und stellt eine ideale Haftung zum Material der Umhüllung 6 sicher. Das Umhüllmaterial kann zusätzlich mit einer Diffusionssperre (z.B. Aluminiumfolie) versehen werden. Nach dem Umhüllvorgang wird der so behandelte Kondensator in bekannter Weise getrocknet und imprägniert, und nach dem Imprägnieren werden die Imprägnierlöcher verschlossen.

Bei nicht imprägnierten, trockenen Leistungskondensatoren entfällt unter Umständen die Notwendigkeit, eine Bohrung bei innerer Reihenschaltung vorzusehen. Die vorgeschlagene Dichtung mit Kontakt-Durchführungselement 3, 12, Spannring 1 und zugehörigem O-Dichtungsring 2 garantiert aber auch bei dieser Ausführungsform die erforderliche Abdichtung.

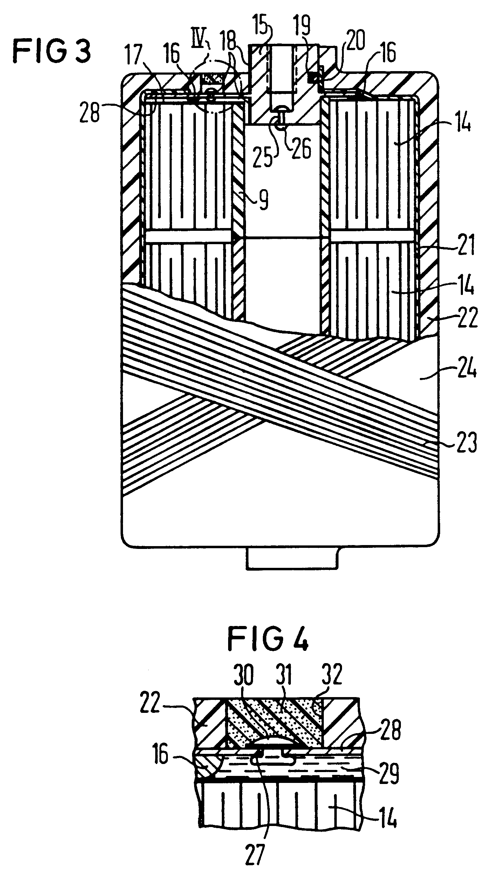

In der FIG 3 ist die Ausführungsform eines imprägnierten axialen GTO-Kondensators dargestellt, der aus mehreren, miteinander verschalteten Wickeln 14 besteht. Das Kontakt-Durchführungselement 15 mit Scheibe 28 besteht aus einem amagnetischen Metall, beispielsweise aus Messing, und ist an den Stellen 16 mit der Schoopschicht 17 elektrisch leitend verbunden. Bei einer nachfolgend beschriebenen, speziellen Kunststoffumhüllung ist es u.U. ausreichend, eine mechanisch aktivierte Dichtfläche 18 am Kontakt-Durchführungselement 15 vorzusehen. Diese Ausführungsform ist auf der linken Seite des Kontakt-Durchführungselementes 15 dargestellt. Die Kunststoffumhüllung kann am Kontakt-Durchführungselement 15 u.U. auch nur bis zur Wandstärkenebene der stirnseitigen Hüllwand der Kunststoffumhüllung 22 reichen. Für Ausführungsformen, bei denen es auf eine verbesserte Dichtheit ankommt, kann auch wie bei den vorstehend angeführten Ausführungsformen ein O-Dichtungsring 19 mit Spannring 20 vorgesehen werden, wie es auf der rechten Seite des Kontakt-Durchführungselementes 15 dargestellt ist.

Die Umhüllung 22 besteht aus faserroving verstärktem Kunststoff 23, z.B. glasfaserroving verstärktem Epoxidharz 24. Zwischen Umhüllung 22 und Kondensatorwickeln 14 ist ein Polyesterschrumpfschlauch 21 angeordnet. Im Kontakt-Durchführungselement 15 ist eine Bohrung 25 angeordnet, damit beispielsweise die Kondensatorwickel 14 nach Herstellung der Kunststoffumhüllung 22 getrocknet werden können. Nachdem der Trockenvorgang abgeschlossen ist, wird die Bohrung 25 mit einem Niet 26 verschlossen.

Die beim Ausführungsbeispiel gemäß FIG 3 dargestellte fasergewickelte Kunststoffumhüllung 22 besitzt eine Dicke von ca. 3 .. .. 5 mm und ist in Faserrichtung mit einer Festigkeit bis zu 700 N/mm² Zerreißspannung ausführbar. Auch bei wiederholten Temperaturwechseln im angegebenen Bereich treten auch ohne O-Ring 19 und Spannring 20 keine undichten Stellen zwischen Kontakt-Durchführungselement 15 und Kunststoffumhüllung 22 auf, wenn Faserrovingvorspannung, Aushärtetemperatur, Aktivierung des Kontaktdurchführungselements und Dicke der Scheibe 10 richtig aufeinander abgestimmt sind.

Es ist zweckmäßig, die Wandstärke der Scheibe 28 so auszulegen, daß sie in Anbetracht der zur Verfügung stehenden Klebeschubspannung über die stirnseitige Umhüllung 22 bei Temperaturwechselbeanspruchungen gedehnt werden kann.

Die Vorspannung des Faserrovings 23 ist so zu wählen, daß bei Temperaturwechselbeanspruchungen eine ausreichende Flächenpressung erhalten bleibt.

Es ist vorteilhaft, die Umhüllung 22 bei einer Temperatur auszuhärten, die ungefähr in der Mitte der Betriebstemperaturgrenzen liegt, d.h. näherungsweise bei Raumtemperatur.

In FIG 4 ist eine alternative Möglichkeit dargestellt, eine Imprägnieröffnung 27 in der Scheibe 28 der Durchführungsebene 15 vorzusehen. Hierzu ist eine Hilfsbohrung 32 in der Umhüllung 22 erforderlich. Nach Einfüllen der Imprägnierflüssigkeit 29 wird die Öffnung 27 durch einen Niet 30 verschlossen und die Hilfsbohrung 32 mit Kunststoff 31, z.B. Epoxidharz, vergossen.

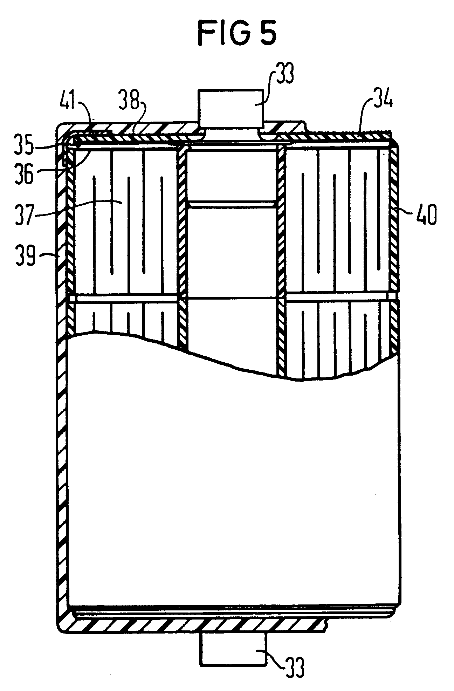

In FIG 5 ist eine Ausführungsform dargestellt, bei der am Kontaktdurchführungselement eine Platine 34 aus glasfaserverstärktem Kunststoff angeordnet ist. Auf der Unterseite der Platine 34 befindet sich eine Metallschicht 35, z.B. eine ca. 70 »m starke Kupferschicht. Die Metallschicht 35 ist mit der Schoopschicht 36 des Kondensatorwickelstapels 37 dicht verlötet, so daß ein öldichter Abschluß des Kondensatorwickelstapels 37 in axialer Richtung entsteht. Die Oberseite 38 der Platine 34 ist zur besseren Haftung für die Kunststoffumhüllung 39, z.B. durch Drehen oder Schmirgeln, aktiviert. Anstelle der Verlötung kann der Wickelstapel des Kondensators 37 auch mit einer die Isolierfolie 40, z.B. ca. 5mm übergreifenden Hüllfolie 41 bzw. einer Hüllharzschicht versehen werden. Durch diese Maßnahmen entsteht ebenfalls ein öldicht eingebauter Kondensatorwickelstapel 37.

## Patentansprüche

1. Axialer elektrischer Wickelkondensator, insbesondere Leistungskondensator, aus zumindest einem auf einem Kernrohr (9) angeordneten Kondensatorwickel (4, 14) bei dem die Wickelstirnseiten mit Schoopschichten (11, 17) versehen sind, der auf seinen zwei gegenüberliegenen Stirnseiten je ein metallisches Kontakt-Durchführungselement (3, 12, 15) besitzt, das mit den jeweiligen Schoopschichten (11, 17) elektrisch leitend verbunden und im Kernrohr (9) zentriert ist und der bis auf den Durchführungsbereich für die äußeren Anschlüsse mit einer Kunststoffumhüllung (6, 22) versehen ist,
**dadurch gekennzeichnet,**
daß am Außenumfang der Kontakt-Durchführungselemente (3, 12, 15) in einem Einstich jeweils zumindest ein vorgespannter O-Dichtungsring (2, 19) angeordnet ist, der durch einen Spannring (1, 20) am Kontakt-Durchführungselement (3, 12, 15) befestigt ist.

2. Wickelkondensator nach Anspruch 1, **dadurch gekennzeichnet,** daß die Kunststoffumhüllung (22) eine Verstärkung aus Faserroving (Glasfaser, Kohlefaser, Kunststoffaser (23) besitzt.

3. Elektrischer Wickelkondensator nach Anspruch 1 oder 2, **dadurch gekennzeichnet,** daß der Spannring (1, 20) aus dem gleichen Material wie die Kunststoffumhüllung (6, 22) besteht.

4. Elektrischer Wickelkondensator nach Anspruch 3, **dadurch gekennzeichnet,** daß die Kunststoffumhüllung (6) aus thermoplastischem Material besteht und daß der Spannring (1) aus einer Materialvariante mit niedrigerem Schmelzpunkt hergestellt ist.

5. Elektrischer Wickelkondensator nach zumindest einem der Ansprüche 1 bis 4, **dadurch gekennzeichnet,** daß am Kontakt-Durchführungselement (3, 12, 15) eine verschließbare Trocknungs-(25) bzw. Imprägnieröffnung angeordnet ist.

6. Elektrischer Wickelkondensator nach Anspruch 5, **dadurch gekennzeichnet,** daß er eine innere Reihenschaltung aufweist, daß eine Imprägnierbohrung (13) durch das Kernrohr (9) über die äußere Wickelhülse zentrisch zu einem Freistreifen (8) angeordnet ist und daß der Bohrungsdurchmesser kleiner als die Breite des Freistreifens (8) ist.

7. Wickelkondensator nach zumindest einem der Ansprüche 1 bis 6, **dadurch gekennzeichnet,** daß eine dichtende Schicht (5, 21) zwischen äußerer Wickelhülle und Kunststoffumhüllung (6, 22) angeordnet ist.

8. Wickelkondensator nach Anspruch 7, **dadurch gekennzeichnet,** daß die dichtende Schicht (5, 21) aus einem unter Wärmeeinwirkung schrumpfbaren Material besteht.

9. Wickelkondensator nach Anspruch 7 oder 8, **dadurch gekennzeichnet,** daß die dichtende Schicht (5, 21) mit dem Durchführungselement (3, 12, 15) verklebt ist.

10. Wickelkondensator nach zumindest einem der Ansprüche 1 bis 9, **dadurch gekennzeichnet,** daß in der Kunststoffumhüllung (6, 22) eine Diffusionssperre angeordnet ist.

11. Wickelkondensator nach Anspruch 10, **dadurch gekennzeichnet,** daß die Diffusionssperre aus einer Aluminiumfolie besteht.

12. Wickelkondensator nach zumindest einem der Ansprüche 1 bis 11, **dadurch gekennzeichnet,** daß die Trocknungs-(25) bzw. Imprägnieröffnung (27) durch einen Niet (26, 30) verschlossen ist.

13. Wickelkondensator nach zumindest einem der Ansprüche 1 bis 12, **dadurch gekennzeichnet,** daß am Kontaktdurchführungselement (3, 12, 15) eine Scheibe (10, 28) angeordnet ist.

14. Wickelkondensator nach Anspruch 13, **dadurch gekennzeichnet,** daß Kontaktdurchführungselement (3, 12, 15) und Scheibe (10, 28) aus einem amagnetischem Material bestehen.

15. Wickelkondensator nach Anspruch 14, **dadurch gekennzeichnet,** daß das amagnetische Material aus Messing besteht.

16. Wickelkondensator nach Anspruch 13, **dadurch gekennzeichnet,** daß die Scheibe (10, 28) aus einer ein- oder beidseitig metallbeschichteten Platine aus glasfaserverstärktem Kunststoff besteht.

17. Wickelkondensator nach Anspruch 16, **dadurch gekennzeichnet,** daß die Metallbeschichtung aus Kupfer besteht.

18. Wickelkondensator nach Anspruch 17, **dadurch gekennzeichnet,** daß die Kupferschicht ca. 70 »m dick ist.

19. Wickelkondensator nach zumindest einem der Ansprüche 13 bis 18, **dadurch gekennzeichnet,** daß die Scheibe (10, 28) mit der Schoopschicht (11, 17) des Kondensatorwickels (4, 14) verlötet ist.

## Claims

1. Axial electric wound capacitor, preferably a power capacitor, comprising at least one capacitor winding (4, 14) which is arranged on a core tube (9) and on which the winding end faces are provided with spray-metallized layers (11, 17), which capacitor has on each of its two opposite end faces a metallic contact lead-through element (3, 12, 15), which is connected electrically conductingly to the respective spray-metallized layers (11, 17) and is centred in the core tube (9), and which capacitor is provided with a plastic sheathing (6, 22) all but for the lead-through region for the external connections, characterized in that on the outer circumference of the contact lead-through elements (3, 12, 15) there is respectively arranged in a groove at least one prestressed O-ring (2, 19), which is fastened on the contact lead-through element (3, 12, 15) by a clamping ring (1, 20).

2. Wound capacitor according to Claim 1, characterized in that the plastic sheathing (22) has a reinforcement of fibre roving (glass fibre, carbon fibre, synthetic fibre (23).

3. Electric wound capacitor according to Claim 1 or 2, characterized in that the clamping ring (1, 20) consists of the same material as the plastic sheathing (6, 22).

4. Electric wound capacitor according to Claim 3, characterized in that the plastic sheathing (6) consists of thermoplastic material and in that the clamping ring (1) is produced from a material variant having a lower melting point.

5. Electric wound capacitor according to at least one of Claims 1 to 4, characterized in that a closable drying opening (25) or impregnating opening is arranged on the contact lead-through element (3, 12, 15).

6. Electric wound capacitor according to Claim 5, characterized in that it has an internal series connection, in that an impregnating bore (13) through the core tube (9) is arranged over the outer winding sheath centrally with respect to a free strip (8) and in that the bore diameter is smaller than the width of the free strip (8).

7. Wound capacitor according to at least one of Claims 1 to 6, characterized in that a sealing layer (5, 21) is arranged between outer winding sheath and plastic sheathing (6, 22).

8. Wound capacitor according to Claim 7, characterized in that the sealing layer (5, 21) consists of a material which can shrink under the effect of heat.

9. Wound capacitor according to Claim 7 or 8, characterized in that the sealing layer (5, 21) is adhesively bonded to the lead-through element (3, 12, 15).

10. Wound capacitor according to at least one of Claims 1 to 9, characterized in that a diffusion barrier is arranged in the plastic sheathing (6, 22).

11. Wound capacitor according to Claim 10, characterized in that the diffusion barrier consists of an aluminium foil.

12. Wound capacitor according to at least one of Claims 1 to 11, characterized in that the drying opening (25) or impregnating opening (27) is closed by a rivet (26, 30).

13. Wound capacitor according to at least one of Claims 1 to 12, characterized in that a disc (10, 28) is arranged on the contact lead-through element (3, 12, 15).

14. Wound capacitor according to Claim 13, characterized in that contact lead-through element (3, 12, 15) and disc (10, 28) consist of an amagnetic material.

15. Wound capacitor according to Claim 14, characterized in that the amagnetic material consists of brass.

16. Wound capacitor according to Claim 13, characterized in that the disc (10, 28) consists of a panel of glass fibre-reinforced plastic metal-coated on one or both sides.

17. Wound capacitor according to Claim 16, characterized in that the metal coating consists of copper.

18. Wound capacitor according to Claim 17, characterized in that the copper layer is about 70 »m thick.

19. Wound capacitor according to at least one of Claims 13 to 18, characterized in that the disc (10, 28) is soldered to the spray-metallized layer (11, 17) of the capacitor winding (4, 14).

## Revendications

1. Condensateur électrique axial enroulé, notamment condensateur de puissance, constitué par au moins une bobine (4, 14) disposée sur un noyau tubulaire (9), et dans lequel les faces frontales de la bobine sont pourvues de couches de choopage (11, 17), qui possèdent, sur leurs deux faces frontales opposées, respectivement un élément de traversée à contact métallique (3, 12, 15), qui est relié d'une manière électriquement conductrice aux couches respectives de choopage (11, 17) et est centré dans le noyau tubulaire (9) et qui comporte une enveloppe en matière plastique (6, 22), en dehors de la zone de traversée pour les bornes extérieures,
caractérisé par le fait que sur le pourtour extérieur des éléments de traversée à contact (3, 12, 15) est disposé, dans une encoche, respectivement au moins un joint d'étanchéité précontraint (2, 19), qui est fixé par une bague de serrage (1, 20), sur l'élément de traversée à contact (3, 12, 15).

2. Condensateur enroulé suivant la revendication 1, caractérisé par le fait que l'enveloppe en matière plastique (22) possède un renforcement constitué par un stratifil formé d'un fibre (fibre de verre, fibre de carbone, fibre de matière plastique (23)).

3. Condensateur enroulé suivant la revendication 1 ou 2, caractérisé par le fait que la bague de serrage (1, 20) est réalisée avec le même matériau que l'enveloppe en matière plastique (6, 22).

4. Condensateur enroulé suivant la revendication 3, caractérisé par le fait que l'enveloppe en matière plastique (6) est réalisée en une matière thermoplastique et que la bague de serrage (1) est réalisée en une variante de matériau à bas point de fusion.

5. Condensateur enroulé suivant au moins l'une des revendications 1 à 4, caractérisé par le fait qu'une ouverture de séchage (25) ou d'imprégnation, pouvant être fermée, est prévue dans l'élément de traversée à contact (3, 12, 15).

6. Condensateur enroulé suivant la revendication 5, caractérisé par le fait qu'il comporte un circuit série intérieur, qu'un perçage d'imprégnation (13) est disposé de manière à s'étendre à travers le noyau tubulaire (9), et par-dessus la douille extérieure de la bobine, en étant centré par rapport à une bande dégagée (8), et que le diamètre du perçage est inférieur à la largeur de la bande dégagée (8).

7. Condensateur enroulé suivant au moins l'une des revendications 1 à 6, caractérisé par le fait qu'une couche d'étanchéité (5, 21) est disposée entre la douille extérieure de la bobine et l'enveloppe en matière plastique (6, 22).

8. Condensateur enroulé suivant la revendication 7, caractérisé par le fait que la couche d'étanchéité (5, 21) est réalisée en un matériau rétractable sous l'action de la chaleur.

9. Condensateur enroulé suivant la revendication 7 ou 8, caractérisé par le fait que la couche d'étanchéité (5, 21) est collée à l'élément de traversée (3, 12, 15).

10. Condensateur enroulé suivant au moins l'une des revendications 1 à 9, caractérisé par le fait qu'un dispositif formant barrière contre la diffusion est disposé dans l'enveloppe en matière plastique (6, 22).

11. Condensateur enroulé suivant la revendication 10, caractérisé par le fait que le dispositif formant barrière contre la diffusion est réalisé en une feuille d'aluminium.

12. Condensateur enroulé suivant au moins l'une des revendications 1 à 11, caractérisé par le fait que l'ouverture de séchage (25) ou d'imprégnation (27) est fermée par un rivet (26, 30).

13. Condensateur enroulé suivant au moins l'une des revendications 1 à 12, caractérisé par le fait qu'un disque (10, 28) est disposé sur l'élément de traversée à contact (3, 12, 15).

14. Condensateur enroulé suivant la revendication 13, caractérisé par le fait que l'élément de traversée de contact (3, 12, 15) et le disque (10, 28) sont réalisés en un matériau a magnétique.

15. Condensateur enroulé suivant la revendication 14, caractérisé par le fait que le matériau amagnétique est réalisé en laiton.

16. Condensateur enroulé suivant la revendication 13, caractérisé par le fait que le disque (10, 28) est constitué par une platine métallisée sur l'une de ses faces ou sur ses deux faces et réalisée en une matière plastique renforcée par des fibres de verre.

17. Condensateur enroulé suivant la revendication 17, caractérisé par le fait que le revêtement métallique est formé de cuivre.

18. Condensateur enroulé suivant la revendication 17, caractérisé par le fait que la couche de cuivre possède une épaisseur d'environ 70 »m.

19. Condensateur enroulé suivant au moins l'une des revendications 13 à 18, caractérisé par le fait que le disque (10, 28) est soudé à la couche de choopage (11, 17) du bobinage (4, 14) du condensateur.
